# EUROPÄISCHE PATENTSCHRIFT

(11) **EP 0 396 644 B1**
(45) Veröffentlichungstag und Bekanntmachung des Hinweises auf die Patenterteilung: **11.08.1993**
(21) Anmeldenummer: 89908376.0
(22) Anmeldetag: 03.08.1989
(51) Int. Cl.: C10J 3/00

(54) **VERFAHREN ZUR GEWINNUNG VON KOMPONENTEN, ELEMENTEN ODER VERBINDUNGEN AUS MATERIALMISCHUNGEN**
PROCESS FOR OBTAINING COMPONENTS, ELEMENTS OR COMPOUNDS FROM MIXTURES OF MATERIALS
PROCEDE DE PRODUCTION DE COMPOSANTS, D'ELEMENTS OU DE COMPOSES A PARTIR DE MELANGES DE MATERIAUX

(30) Priorität: 05.08.1988 CH 2984/88
(43) Veröffentlichungstag der Anmeldung: 14.11.1990
(73) Patentinhaber: Wiesengrund, Thomas, D-90491 Nürnberg (DE)
(72) Erfinder: Weber-Anneler, Hans, CH- 5200 Brugg (CH)
(74) Vertreter: Zink-Wild, Markus Peter
(86) Internationale Anmeldenummer: CH8900143
(87) Internationale Veröffentlichungsnummer: WO9001529

(56) Entgegenhaltungen:
- WO-A-83/04270
- DE-A- 2 609 320
- DE-A- 2 742 452
- FR-A- 2 347 956
- FR-A- 2 478 615
- GB-A- 2 092 174
- US-A- 4 113 446

## Beschreibung

Die vorliegende Erfindung betrifft ein Verfahren zur Gewinnung von Komponenten, Elementen oder Verbindungen aus Materialmischungen und kann angewendet werden zur Reduktion der Abfallberge durch chemische Umwandlung von Abfällen sowie zur Verminderung oder Vermeidung von Abfällen bei Produktions- und Konsumprozessen.

Ziel des erfindungsgemässen Verfahrens ist die Nutzung der unerwünschten Stoffe als Rohstoffe für die Gewinnung von Komponenten, Elementen oder Verbindungen. Wenn es gelingt, eine genügende Wertschöpfung zu erlangen, sind zwei Ziele erreicht: Die Produktion kommt mit weniger Rohstoffen aus und wird dadurch wirtschaftlicher, und was mehr ins Gewicht fällt, die unerwünschten Schadstoffe sind verschwunden. Die Verwertung unerwünschter Stoffe nach dem erfindungsgemässen Verfahren ist wirtschaftlich attraktiv und entlastet sowohl die Oekologie als auch die Oekonomie.

Dieses Ziel des erfindungsgemässen Verfahrens wird dadurch erreicht, dass beim geplanten Prozess alle Stoff- und Energiekreisläufe beachtet und vollständig geschlossen werden ähnlich einem Stromkreis, bei welchem nie Abfallelektrizität entstehen kann. Zwei Elemente sind hierbei zu berücksichtigen: die Koppelproduktion und die Nutzung von Reaktionspartnern, die im Prozess als Produkte ohnehin anfallen. Dies wird ermöglicht im sogenannten Hydrokritverfahren.

Hydrokrit heisst "Wassertrennung" oder genauer Trennung von chemischen Bindungen mit Hilfe von Wasser. So wie das Wasser beim Waschprozess den Schmutz vom Gewebe trennt (physikalischer Waschprozess), so werden beim Hydrokritprozess die unerwünschten chemischen Bindungen, vor allem diejenigen der unerwünschten Bestandteile der eingesetzen Materialien aufgetrennt (chemischer Waschprozess). Die Trennung mit Wasser (Spaltung) ist praktisch vollkommen bei Temperaturen um 1000 oC, wenn die Kontaktzeit zwischen dem überhitzten Wasserdampf und den zu spaltenden Molekülen genügend lang ist. Bemerkenswert ist, dass alle organischen gasförmigen Moleküle , welche neben Kohlenstoff, Wasserstoff und Sauerstoff noch Chlor, Fluor, Stickstoff oder Schwefel enthalten, stets in die gleichen, kleinen Spaltprodukte übergeführt werden. Es handelt sich hier um ein Gemisch von Kohlenmonoxid, Wasserstoff mit wenig Stickstoff, sowie die einfachen Verbindungen von Chlor, Fluor, Schwefel oder Phosphor mit Wasserstoff.

Das Gemisch von Kohlenmonoxid und Wasserstoff, gegebenenfalls mit wenig Stickstoff vermischt, heisst Synthesegas oder Wassergas und dient als Einsatzgas bei der Herstellung reiner Kohlenwasserstoffe oder Alkohole in einer chemischen Synthese. Die unerwünschten Stoffe wie Chlor-, Fluor-, Schwefel- und Phosphorwasserstoff werden vor der Synthese in einem Gaswäscher mit Hilfe von Redoxprozessen abgetrennt.

Währenddem die Spaltung der unerwünschten Moleküle bei einer Temperatur von rund 1000 oC Wärme der entsprechenden Temperatur benötigt, wird bei der anschliessenden Synthese des Spaltgases zur Herstellung flüssiger Brenn- oder Rohstoffe etwa dieselbe Wärme bei einer Temperatur von etwa 200 oC wieder frei. Sie wird zur Vorwärmung des Speisewassers für den Dampferzeuger verwendet, während die sensible Wärme der erzeugten heissen Spaltgase verwendet wird, um das Waschwasser zu destillieren und die unerwünschten Stoffe wie Schwefel und etwa vorhandene flüchtige Schwermetalle oder deren Salze in eine konzentrierte, ungiftige und schwerlösliche Form überzuführen. Insgesamt wird dabei rund die Hälfte der in den eingesetzen Materialien enthaltenen Energie für den Prozess verbraucht. Die andere Hälfte bleibt gespeichert in der Form gewonnener, reiner organischer Rohstoffe oder Energieträger.

Neben diesen flüssigen organischen Produkten liefert das Hydrokritverfahren feste oder gelöste Stoffe als Produkte oder Zwischenprodukte zur weiteren Verarbeitung.

Kurz zusammengefasst besteht das Hydrokritverfahren aus den folgenden vier Teilprozessen:
1. Spaltung der zu verarbeitenden Materialien mit Wasserdampf und Kohlendioxid in der Flamme eines brennbaren Gases bei einer Temperatur zwischen 350 und 1050 oC.
2. Spaltung aller entstandenen Gase bei einer Temperatur zwischen 950 und 1050 oC bei einer Verweilzeit von wenigstens einer Sekunde in niedermolekulare Verbindungen und/oder Elemente.
3. Waschung des Spaltgases durch Einleiten der heissen Gase in Wasser und Abtrennen des Synthesegases (Mischung von CO und H2) von den restlichen niedermolekularen Verbindungen oder Elementen im Wasser. Rückgewinnung des Waschwassers durch Eindampfung und Sedimentation der schwerlöslichen Anteile in der entstehenden Sole.
4. Synthese von flüssigen organischen Verbindungen aus dem Spaltgas und beimischen der bei der Synthese erhaltenen gasförmigen Kohlenwasserstoffe und Kohlendioxid zum brennbaren Gas.

Im Hydrokritprozess werden die im ersten Schritt entstandenen anorganischen Produktgemische, das im dritten Schritt erhaltene aufkonzentrierte Waschwasser und die im vierten Schritt erhaltenen Kohlenwasserstoffe und/oder Alkohole gewonnen. Es bleiben keinerlei unerwünschte, mit den heutigen Nachweismethoden feststellbare Rückstände.

Die eingesetzen Materialien können homogen oder heterogen, sowie organischer oder anorganischer Natur sein und in irgend einem der drei Aggregatszustände vorliegen (fest, flüssig oder gasförmig). Solche Materialien können zum Beispiel Haushaltsabfälle, Klärschlämme, Rückstände der Kehrichtsverbrennung, wie Schlacke oder Filterstäube, Bauschutt, Landwirtschafts-, Industrie- oder Spitalabfälle oder Lebensmittelabfälle sein. Eine andere Kategorie solcher Materialien sind: mineralhaltige Sande, salzhaltiges, ölhaltiges oder kohlehaltiges Gestein. Normalerweise werden Gemische solcher Materialien eingesetzt.

Die Materialmischung ist so zusammengesetzt, dass unter den in jedem einzelnen Fall gewählten Bedingungen eine chemische Umsetzung in das gewünschte feste Produkt im Konverter führt und gleichzeitig die Trennung in Synthesegas, schwerlösliche Rückstände und Sole im Gaswäscher erfolgt.

Neben Wasserdampf wird dem Konverter wenigstens ein brennbares Gas, Sauerstoff sowie Kohlenstoffdioxid solange zugeführt, bis die gewünschte Umsetzung im eingesetzten Material erreicht ist. Die zuzuführenden Gase werden weitmöglichst ersetzt durch Gase, die in den anderen Stufen des laufenden Prozesses oder eines gleichzeitig ablaufenden zusätzlichen Prozesses anfallen.

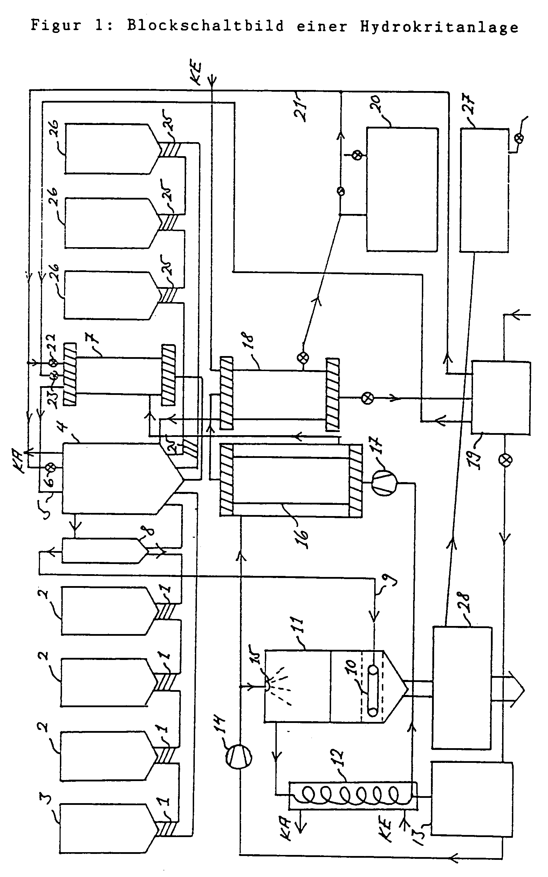

Das erfindungsgemässe Verfahrenssoll mit Hilfe des Blockschaltbildes (Figur 1) genauer erläutert werden. Die gewünschte Materialmischung wird mit Hilfe von Förderschnecken 1 den drei Materialsilos 2 oder dem Schlammsilo 3 entnommen und dem Konverter 4 zugeführt. Diesem wird über die Zuleitung 5 ein Gemisch aus Kohlenstoffdioxid mit rund 10 Vol.-% Sauerstoff und über das Regelventil 6 das benötigte brennbare Gasgemisch zugeführt. Mit dem Dampferzeuger 7 wird dem Konverter 4 zusätzlich Dampf zugeführt. Das im Konverter 4 entstehende Gasgemisch wird im Zyklon 8 von Partikeln befreit, welche in den Materialstrom zurückgeführt werden. Das von Partikeln befreite Gasgemisch wird über die Leitung 9 und den Einströmring 10 dem Gaswäscher 11 zugeführt. Das ausgewaschene Gasgemisch durchläuft den Kühler 12, welcher den Wasserdampf zur Kondensation bringt und im Speisewassertank 13 abscheidet. Die Pumpe 14 drückt ein wenig Speisewasser durch die Brause 15 im Gaswäscher zur Kühlung und Verbesserung des Auswascheffektes. Der Hauptteil des Speisewassers wird zur Kühlung des Wellenreaktors 16 verwendet und dadurch vorgewärmt dem Dampferzeuger 7 zugeführt. Der Gaskompressor 17 komprimiert das gewaschene Synthesegas auf einen Druck zwischen 5 und 20 bar und führt es dem Wellenreaktor 16 zu. Hier findet die exotherme Synthesereaktion statt, welche Wasserdampf, Kohlenstoffdioxid, gasförmige Kohlenwasserstoffe, unter anderen Propan oder Butan enthaltend, erzeugt. Das zunächst gasförmige Gemisch wird dem Destillationsbehälter 18 zugeführt und dabei wird mittels Kühlung das Wasser und das Propan oder Butan kondensiert. Das Wasser wird den Elektrolysenzellen 19 und schliesslich dem Speisewasserbehälter 13 zugeführt, das Propan oder Butan im Tank 20 gespeichert. Die gasförmigen Produkte werden über die Leitung 21 zusammen mit dem Elektrolysewasserstoff dem Dampferzeuger 7 und dem Konverter 4 zugeführt. Der Dampferzeuger 7 wird durch Regulierung von Gas- und Sauerstoff- zufuhr über die Ventile 22 und 23 so gesteuert, dass der Dampfdruck sich im gewünschten Intervall zwischen 8 und 10 bar befindet und in seinem Ausgang für Abgase genügend überschüssiger Sauerstoff für die Einhaltung der Temperatur im Konverter 4 bleibt.

Das Entwässerungswasser des Destillationsbehälters 18 wird über die Elektrolysenzellen 19 in den Speisewasserbehälter 13 geleitet. Die Kühlung des Kühlers 12, des Destillationsbehälters 18 und des Konverters 4 geschieht über einen separaten Kühlwasserkreislauf mit Kühlwasser- eintritt (KE) und -austritt (KA), welcher die Wärme mit einem externen Wasser- Wasser oder Wasser- Luft Wärmetauscher an einen Verbraucher weitergibt.

Das im Konverter 4 erzeugte feste Produkt wird je nach Qualität über die Förderschnecken 25 in einem der drei verschiedenen Produktsilos 26 gelagert bis zur Verteilung. Die erzeugte Sole wird im Tank 27 gelagert bis zur weiteren Verarbeitung. Die im Wäscher anfallenden schwerlöslichen Schlämme werden im Schlammtank 28 von der Sole abgetrennt und mit oder ohne Zwischenverarbeitung in den Schlammsilo 3 zurückgeführt.

Die nachfolgenden Ausführungsbeispiele illustrieren das erfindungsgemässe Verfahren.

### Beispiel 1:

Beim Filterstaubverfahren wird ein Gemisch von 65 Gew.-% Klärschlamm mit 40 Gew.-% Trockengehalt und 35 Gew.-% Filterstaub von Nassreinigungsanlagen der Kehrichtverbrennung dem Konverter zugeführt und bei einer Temperatur von 850 -1000 oC mit einer Verweilzeit einer halben Stunde einem Strom von 30 Vol.-% Dampf, 10 Vol.-% Methan, 10 Vol.-% Wasserstoff, 45 Volumenprozent Kohlenstoffdioxid und 5 Vol.-% Sauerstoff ausgesetzt. Die Elektrolysenzellen liefern 160 Normkubikmeter Wasserstoff und 80 Normkubikmeter Sauerstoff pro Tonne eingesetztes Materialgemisch bei einem Elektrizitätsverbrauch von 720 Kilowattstunden. Der Dampferzeuger liefert 480 Normkubikmeter Sattdampf von 10 bar bei einem Gasverbrauch, welcher rund 30 Normkubikmeter Synthesegas oder Wasserstoff entspricht. Es werden insgesamt 460 Normkubikmeter Synthesegas und daraus 80 Kilogramm Butan gewonnen. Insgesamt sind beim Filterstaubverfahren 650 Kilogramm Klärschlamm vergast und 350 Kilogramm Filterstaub entgiftet worden mit einem Elektrizitätseinsatz von 720 Kilowattstunden bei einem Butanertrag von 80 kg (960 Kilowattstunden gespeicherte Energie).

### Beispiel 2:

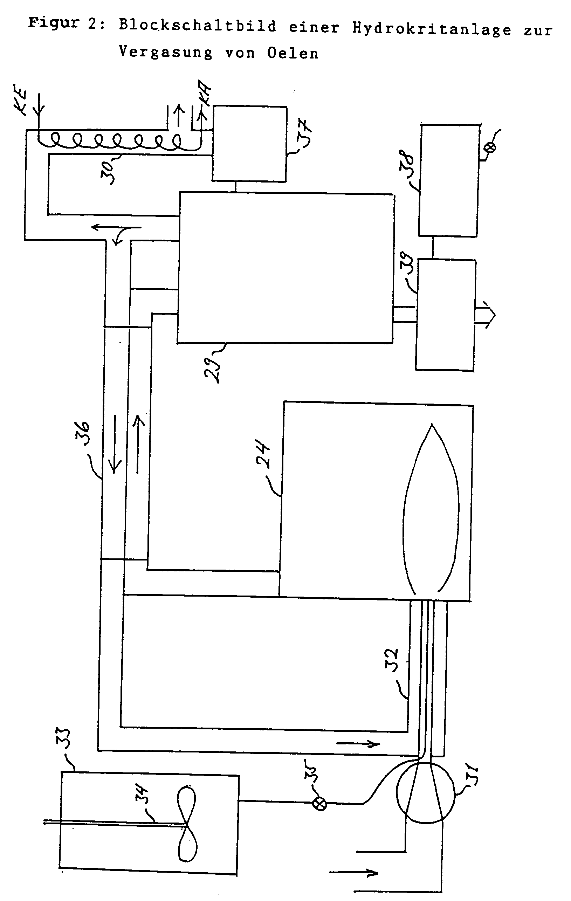

Für die Vergasung von Oelen, insbesondere halogenierte Kohlenwasserstoffe (Figur 2) wird der Konverter 24 als Gasbrenner ausgebildet und mit Synthesegas aus dem Wäscher 29, welches vor dem Kühler 30 abgezweigt wird, betrieben. Ueber einen Kompressor 31 wird dem Konverter 24 Luft zugeführt, welche von der heissen Synthesegasleitung 32, die die Luftzufuhr konzentrisch umgibt, auf rund 400 oC vorgewärmt wird. Aus dem Oeltank 33 mit Rührwerk 34 wird dem Brenner über das Ventil 35 Oel zugeführt, welches im vorgewärmten Luftstrom verdampft und dessen Dampf von der Gasflamme angesogen wird. Weil das Synthesegas aus dem Wäscher 29 etwa einen gleichen Volumenteil Wasserdampf enthält, welches Gemisch im Wärmetauscher 36 durch das Spaltgas im Ausgang des Konverters 24 stark vorgewärmt wird, ergibt sich eine effiziente Vergasung des Oels. Das Synthesegas kann direkt für Heiz- oder motorische Zwecke verwendet oder einem Blockheizkraftwerk zugeführt werden. Bei chlorierten oder fluorierten Oelen muss dem Speisewasser im Speisewassertank 37 Kalk, Soda oder Metallhydroxid zugeführt werden zur Neutralisierung der entstehenden Salzsäure. Je nach Qualität der eingesetzten Oele und der Führung des Prozesses kann die entstehende Salzsäure auch direkt aus dem Soletank 38 gewonnen werden. Bei einem chlorierten Oel mit einem Chlorgehalt von rund 30 Gewichtsprozent werden pro Megawattstunde Heizwert rund 300 Normkubikmeter Synthesegas gewonnen bei etwa 170 Normkubikmeter Luftbedarf. Das mit Stickstoff vermischte Synthesegas hat einen Anteil von rund 70 Vol.-% und einen Heizwert von etwa 2 Kilowattstunden pro Normkubikmeter. Die bei der Verarbeitung von Oelen im Tank 33 oder im Schlammtank 39 zurückbleibende Schlämme können analog wie Klärschlamm verarbeitet werden.

Bei der Produktion von Kaffee- und Gewürzextrakten fallen Rückstände an, welche nicht in vollem Umfange als Futtermittel oder Düngemittel wieder eingesetzt werden können. Diese Materialien können mit dem erfindungsgemässen Verfahren in Synthesegas, oder Methan oder Butan umgewandelt werden.

Das Hydrokritverfahren unterscheidet sich von herkömmlichen Produktions- oder Regenerationsverfahren dadurch, dass ein radikaler Abbau unerwünschter Verbindungen oder Komponenten durch die thermochemische Reaktion mit Wasserdampf oder äquivalenten Reagentien stattfindet. Während bei den meisten Produktionsprozessen entweder selektive Syntheseschritte ohne oder mit nur geringfügigen Abbaureaktionen gekoppelt werden, ist beim Hydrokritprozess der Abbau radikal. Die unerwünschten Bindungen werden in den beiden ersten Verfahrensschritten radikal abgebaut bis auf einzelne Elemente oder Verbindungen von höchstens zwei verschiedenen Elementen. Daher fallen bei Produktionsprozessen ohne genügenden Abbau viele unerwünschte Komponenten als Abfall an oder bei der Aufbereitung von Abfällen kann nur eine teilweise Regeneration mit vertretbaren Kosten erreicht werden. Für die unerwünschten Stoffe bleibt dann nur die Deponie oder die heute ebenfalls mit hohen Kosten verbundene Hochtemperaturverbrennung als Alternativen. Demgegenüber ermöglicht das Hydrokritverfahren die Sanierung oder Vermeidung der Deponien und Hochtemperaturverbrennung durch die vollständige Ausnutzung der eingesetzten Materalien und Energien.

Das Hydrokritverfahren hat einige Aehnlichkeiten mit den Pyrolyseverfahren, welche zur Zeit für die Verwertung von Kunststoffabfällen entwickelt werden. Anstelle von Luft oder Wasserdampf wird nur sauerstofffreie Verbrennungsluft zugeführt. Wie bei der Hydrolyse entsteht auch hier ein Gasgemisch, welches zu chemischen Rohstoffen weiterverarbeitet werden kann. Bei der Pyrolyse entsteht jedoch ein sehr breites Spektrum von Produkten und die festen Rückstände sind nicht wieder verwendbar. Ausserdem entsteht eine grosse Menge von mit Schwermetallen durchsetztem Russ, welcher deponiert werden muss.

Der Stand der Technik ist von folgenden Publikationen festgehalten worden:
- Hans Grütter: Klärschlammentsorgung SIA- Zeitung, 14. Jan. 38-41 (1988)
- A. M. Egger: Die Integrierung der Sondermüllverbrennung in das Entsorgungskonzept eines Chemiewerkes
SIA- Zeitung, 14. Jan. 41- 45 (1988)
- B. Milani: Abfallwirtschaft zwischen Ideologie und Wissen, SIA-Zeitung 28.Jan. 105-107 (1988)
- Dr. A. Stücheli: Abgasreinigung bei Kehrichtverbrennungsanlagen, SIA-Zeitung 28.Jan.116-124 (1988)
- G. Hilscher: Kunststoffpyrolyse: Rohstoffquelle für die Chemie, Technische Rundschau 23/88,78-81.

In GB-A-209 2174 wird ein Verfahren für die Herstellung von Synthesegas aus Kohle beschrieben, wobei eine Feinkohlefraktion und alle organischen Rückstände in einem "fluidised bed" verbrannt werden.

In der vorliegenden Erfindung wird kein "fluidised bed" verwendet. Als "fuel" wird Synthesegas verwendet, welches im erfindungsgemässen Verfahren selbst produziert wird!

In GB-A-209 2174 sind die "counter-current gasification" und das "steam reforming" (Spaltung mit Wasserdampf) klar getrennt.

In der vorliegenden Erfindung werden im ersten Schritt die Vergasung und die Spaltung mit Wasserdampf gleichzeitig ausgeführt. Dies hat den Vorteil, dass ein reines rohes Gas erhalten wird, welches weder Phenole noch Teer enthält.

Ausserdem treten beim vorliegenden Verfahren geringere Wärmeverluste auf, was unter anderem zu einer besseren Produkteausbeute führt (wegen besserer Effizienz der Umwandlung).

## Patentansprüche

1. Verfahren zur Gewinnung von Komponenten, Elementen oder Verbindungen aus Materialmischungen dadurch gekennzeichnet, dass man
in einem ersten Schritt die genannte Materialmischung auf eine Temperatur zwischen 350 oC und 1050 oC erwärmt und mit einem Gemisch,enthaltend Wasserdampf, wenigstens ein brennbares Gas, Sauerstoff und Kohlenstoffdioxid, solange zur Reaktion bringt, bis der organische Anteil in der verwendeten Materialmischung auf einen Wert von unterhalb 100 ppm, entsprechend 100 Gramm organischer Anteil pro Tonne Materialmischung, abgebaut ist, wobei ein festes anorganisches Produktgemisch sowie ein Gasgemisch entstehen,
in einem zweiten Schritt das genannte entstandene Gasgemisch bei einer Temperatur zwischen 950 und 1050 oC während wenigstens einer Sekunde in Verbindungen und/oder Elemente aufspaltet,
in einem dritten Schritt die erhaltenen Verbindungen und/oder Elemente bei einer Temperatur von 200 - 800 oC in Wasser einleitet,um einerseits das entstandene Gemisch von Kohlenstoffmonoxid und Wasserstoff, kurz als Synthesegas bezeichnet, abzutrennen und um andererseits die restlichen niedermolekularen Verbindungen und/oder Elemente im Wasser, kurz als Waschwasser bezeichnet, zurückzubehalten,
in einem vierten Schritt das mit Wasserdampf vermischte Synthesegas katalytisch in flüssige Kohlenwasserstoffe und/oder Alkohole umwandelt und die dabei als Nebenprodukte erhaltenen gasförmigen Kohlenwasserstoffe und Kohlenstoffdioxid dem im ersten Schritt benötigten brennbaren Gas zufügt,
und das im ersten Schritt entstandene feste anorganische Produktgemisch, das im dritten Schritt erhaltene Waschwasser und die im vierten Schritt entstandenen Kohlenwasserstoffe und/oder Alkohole gewinnt.

2. Verfahren nach Anspruch 1, dadurch gekennzeichnet, dass die genannte Materialmischung wenigstens ein, insbesondere zwei Ausgangsmaterialien enthält, ausgewählt aus der Gruppe, bestehend aus:
Erde:
insbesondere mit Lösungsmitteln, Oel, Teer oder Schwermetallen verunreinigte Erde, oder organisch und anorganisch verunreinigte Erdbestandteile, wie beispielsweise Bauschutt, oder mit Schwermetallen und/oder Edelmetallen verunreinigter Sand,
Kohle:
insbesondere stark schwefel- oder ligninhaltige Kohle oder mit Lösungsmitteldämpfen beladene Aktivkohle,
Schlacke:
insbesondere Schlacke von Industriefeuerungen, Hochöfen, thermischen Kraftwerken oder Abfallverbrennungsanlagen,
Staub:
insbesondere Filterstaub von Elektrofiltern oder Trockenrückstände der nassen, halbnassen oder trockenen Rauchgasreinigung bei Abfallverbrennungsanlagen oder Industriefeuerungen,
Schlämme:
insbesondere bei der Abwasserreinigung im Ueberschuss anfallende oder mit Schwermetallen verunreinigte Klärschlämme, Galvanikschlämme, Schlämme aus der Munitions- und Sprengstofffabrikation und Rückstände der Lösungsmitteldestillation und der Farbstoff- und Lackproduktion,
Lebensmittel:
insbesondere Rückstände, Ueberschüsse oder Nebenprodukte der Lebensmittelproduktion oder des Lebensmittelkonsums, insbesondere Kaffeesatz, Abfälle aus Schlachthöfen,
Chemikalien:
insbesondere Nebenprodukte bei chemischen oder biochemischen Analysen oder Verfahren, insbesondere Filterrückstände, verdorbene nichtflüssige Chemikalien oder schwach radioaktive Abfälle aus Laboratorien,
Organe:
insbesondere Kadaver, Gewebe- und Blutmaterial aus der Chirurgie, sowie andere feste Rückstände aus Spitälern, insbesondere verdorbenene Medikamente,
Gummi und Kunststoffe:
insbesondere Rückstände der Produktion und des Konsums,z.B. Pneu,mit metallischen oder anderen anorganischen Materialien verbundene oder vermischte Elastomere, Thermoplaste und Duroplaste,

3. Verfahren nach einem der Ansprüche 1 bis 2, dadurch gekennzeichnet, dass die Materialmischung ausgewählt ist aus einer Filterstaub-Klärschlammmischung, einer Filterstaub- Kohlemischung und einer Sand- Klärschlamm- Kohlemischung.

4. Verfahren nach einem der Ansprüche 1 bis 3, dadurch gekennzeichnet, dass die genannte Materialmischung wenigstens ein, insbesondere zwei Ausgangsmaterialien enthält, ausgewählt aus der Gruppe, bestehend aus:
Oele und Paraffine:
wie Schweröl oder Paraffine, insbesondere aus der Erdölraffination oder der Altölaufbereitung,
Alkohole und Ketone:
wie Methanol, Aetanol oder Industriealkohole, oder Ketone, insbesondere Azeton,
Halogenierte Kohlenwasserstoffe:
wie Trichloräthan, Trichloräthylen, Chloroform und chlorierte aromatische Verbindungen, insbesondere Chlorbenzole oder Polychlor- biphenyle, -furane oder -dioxine, oder ein Freon, insbesondere Freon 113,
Anorganische Flüssigkeiten:
wie Mineralsäuren und Basen mit oder ohne Schwermetalle, insbesondere Salzsäure, gelöstes Eisenchlorid und chromhaltige Schwefelsäure sowie gelöste Cyanide, Nitrite, Nitrate und Phosphate.

5. Verfahren nach einem der Ansprüche 1 bis 4, dadurch gekennzeichnet, dass die genannte Materialmischung ausgewählt ist aus einer Altöl-chlorierten Kohlenwasserstoffmischung und einer Sand-Klärschlammhalogenierten Kohlenwasserstoffmischung.

6. Verfahren nach einem der Ansprüche 1 bis 5, dadurch gekennzeichnet, dass das im ersten Schritt erwähnte Gasgemisch 10 - 40 Vol.-% Wässerdampf, 10 - 40 Vol.-% brennbares Gas, insbesondere Methan, 5 - 20 Vol.-% Sauerstoff und 30 bis 70 Vol.% Kohlenstoffdioxid enthält.

7. Verfahren nach einem der Ansprüche 1 bis 6, dadurch gekennzeichnet dass die Reaktionszeit im ersten Schritt für flüssige Materialmischungen zwischen 0.5 und 3 Sekunden und für feste Materialmischungen zwischen 20 Minuten und zwei Stunden liegt.

8. Verfahren nach einem der Ansprüche 1 bis 7, dadurch gekennzeichnet, dass dem im ersten Schritt genannten Gasgemisch schädliche Gase, wie zum Beispiel Rauchgase aus Feuerungen, Abgase von Verbrennungsmotoren oder Abluft aus Lüftungsschächten, beigemischt werden.

9. Verfahren nach einem der Ansprüche 1 bis 8, dadurch gekennzeichnet, dass die im ersten Schritt erwähnte Reaktion bei flüssigen Materialmischungen in einem Gasbrenner durchgeführt wird, welcher mit dem im dritten Schritt erhaltenen Synthesegas- Wasserdampfgemisch betrieben wird.

10. Verfahren nach einem der Ansprüche 1 bis 9, dadurch gekennzeichnet, dass der zweite Schritt in einer Nachbrennkammer durchgeführt wird.

11. Verfahren nach einem der Ansprüche 1 bis 10, dadurch gekennzeichnet, dass die im ersten Schritt erwähnte Reaktion bei festen und schlammigen Materialmischungen in einer Feststofffeuerung durchgeführt wird, welche mit dem im dritten Schritt erhaltenen Synthesegas- Wasserdampfgemisch betrieben wird.

12. Verfahren nach einem der Ansprüche 1 bis 11, dadurch gekennzeichnet, dass der im ersten Schritt benötigte Sauerstoff Restsauerstoff ist, der in der Abluft aus Feuerungen, Verbrennungsmotoren oder in der Abluft aus Lüftungsanlagen enthalten ist.

13. Verfahren nach einem der Ansprüche 1 bis 12, dadurch gekennzeichnet, dass das im dritten Schritt benötigte Wasser Abwasser, Sickerwasser von Deponien, verseuchtes Wasser oder Meerwasser ist.

## Claims

1. A process for the production of components, elements or compounds from mixtures of materials characterized in that
- in a first step said mixture of materials is heated to a temperature between 350°C and 1050°C and is reacted with a mixture, containing water vapor, at least one combustible gas, oxygen and carbon dioxide, during such a long time until the organic portion in the used mixture of materials is degraded to a value below 100 ppm, corresponding to 100 gram of organic portion per 1000 kg of mixture of materials, whereby a solid inorganic product mixture as well as a gas mixture are produced;
- in a second step said produced gas mixture is cleaved at a temperature between 950° and 1050°C during at least one second into compounds and/or elements;
- in a third step the obtained compounds and/or elements are introduced into water at a temperature from 200° to 800°C in order to separate the produced mixture of carbon monoxide and hydrogen, abbreviated as synthesis gas, and in order to retain the remaining low-molecular compounds and/or elements in the water, abbreviated as wash water;
- in a fourth step the synthesis gas, mixed with water vapor, is transformed catalytically into liquid hydrocarbons and/or alcohols and whereby the gaseous hydrocarbons and carbon dioxide, obtained as by-products, are added to the combustible gas needed in the first step;
- and obtaining the solid inorganic product mixture, produced in the first step, the wash water, produced in the third step, and the hydrocarbons and/or alcohols, produced in the fourth step.

2. The process according to claim 1 characterized in that said mixture of materials contains at least one, preferably two, starting materials selected from the group consisting of:
earth: especially earth contaminated with solvents, oil, tar or heavy metals, or components of earth contaminated with organic and inorganic materials, such as for example rubble, or sand contaminated with heavy metals and/or precious metals;
coal: especially coal containing a lot of sulphur and lignin, or activated charcoal contaminated with with vapors of solvents;
slag: especially slag of industrial firing equipments, blast furnaces, thermic power stations or waste combustion plants;
dust: especially filter dust of electric separators or dry residues of the wet, semiwet or dry cleaning of flue gas of waste combustion plants or industrial firing equipments;
sludges: especially sewage sludges produced in excess during the purification of sewage, sewage sludges contaminated with heavy metals, sludges from galvanization, sludges from the production of ammunition and of explosives, and residues of the distillation of solvents, and residues of the production of dyestuffs and of lacquers;
foodstuffs: especially residues, excess or by-products of production or consumption of foodstuffs, especially coffee-grounds, waste from slaughter-houses;
chemicals: especially by-products of chemical or biochemical analysis or processes, especially filtration residues, tainted non-liquid chemicals or slightly radioactive wastes from laboratories;
organs: especially carcasses, tissue and blood materials from surgery as well as other solid residues from hospitals, especially tainted medicines;
rubber and plastic materials: especially residues of production and consumption, e.g. tyres, elastomers mixed or combined with metallic or other inorganic materials, thermoplastics and thermosetting plastics.

3. The process according to one of claims 1 to 2, characterized in that the mixture of materials is selected from a mixture of filter dust and sewage sludge, a mixture of filter dust and coal, and a mixture of sand, sewage sludge and coal.

4. The process according to one of claims 1 to 3, characterized in that said mixture of materials contains at least one, especially two, starting materials selected from the group consisting of:
oils and paraffins: such as heavy oil or paraffins, especially from the crude oil refinement or from the waste oil regeneration;
alcohols and ketones: such as methanol, ethanol or industrial alcohols, or ketones, especially acetone;
halogenated hydrocarbons: such as trichlorethane, trichlorethylene, chloroform and chlorinated aromatic compounds, especially chloro benzenes or polychloro-biphenyls, -furans, -dioxins, or a freon, especially freon 113;
inorganic liquids: such as mineral acids and bases with or without heavy metals, especially hydrochloric acid, dissolved iron chlorid, chromium containing sulphuric acid as well as dissolved cyanides, nitrites, nitrates and phosphates.

5. The process according to one of claims 1 to 4, characterized in that said mixture of materials is selected from a mixture of waste oil and chlorinated hydrocarbons, and a mixture of sand, sewage sludges and halogenated hydrocarbons.

6. The process according to one of claims 1 to 5, characterized in that the gas mixture, as mentioned in the first step, contains 10-40 vol.-% of water vapor, 10-40 vol.-% combustible gas, especially methane, 5-20 vol.-% of oxygen and 30-70 vol.-% of carbon dioxide.

7. The process according to one of claims 1 to 6, characterized in that in the first step the reaction time is between 0.5 and 3 seconds for liquid mixtures of materials and between 20 minutes and 2 hours for solid mixtures of materials.

8. The process according to one of claims 1 to 7, characterized in that to the gas mixture, as mentioned in the first step, are admixed noxious gases, such as for example burnt gas from firings, waste gas from internal combustion engines or exhaust air from ventilation shafts.

9. The process according to one of claims 1 to 8, characterized in that the reaction, as mentioned in the first step, is carried out in the case of liquid mixtures of materials in a gas burner which is run by the mixture of synthesis gas and water vapor obtained in the third step.

10. The process according to one of claims 1 to 9, characterized in that the second step is carried out in a secondary combustion chamber.

11. The process according to one of claims 1 to 10, characterized in that the reaction, as mentioned in the first step, is carried out in a solid matter firing equipment in the case of solid and muddy mixtures of materials, whereby said firing equipment is run by the mixture of synthesis gas and water vapor obtained in the third step.

12. The process according to one of claims 1 to 11, characterized in that the oxygen, as needed in the first step, is residual oxygen which is contained in the exhaust air from combustion accessories, combustion engines or in the exhaust air from ventilating systems.

13. The process according to one of claims 1 to 12, characterized in that the water, as needed in the third step is waste water, percolating water from dumps, infested water or sea water.

## Revendications

1. Procédé pour la récupération de composants, d'éléments ou de composés constitués par des mélanges de matières, caractérisé en ce que,
dans une première étape, on réchauffe le mélange de matières mentionné à une température entre 350°C et 1050°C, et on l'amène à réagir avec un mélange contenant de la vapeur d'eau, au moins un gaz combustible, de l'oxygène et du dioxyde de carbone, jusqu'à ce que la fraction organique dans le mélange de matières utilisé soit décomposée à concurrence d'une valeur inférieure à 100 ppm, correspondant à 100 g de fraction organique par tonne de mélange de matières, permettant d'obtenir un mélange de produits solide inorganique, ainsi qu'un mélange de gaz,
dans une deuxième étape, on sépare en composés et/ou en éléments le mélange de gaz obtenu mentionné à une température entre 950 et 1050°C pendant au moins une seconde,
dans une troisième étape, on introduit dans de l'eau les composés et/ou les éléments obtenus à une température de 200-800°C, pour d'une part séparer le mélange obtenu de monoxyde de carbone et d'hydrogène, que l'on désigne brièvement par l'expression "gaz de synthèse", et d'autre part conserver dans l'eau les composés et/ou les éléments résiduaires à bas poids moléculaire, que l'on désigne brièvement par l'expression "eau de lavage",
dans une quatrième étape, on transforme par voie catalytique en hydrocarbures liquides et/ou en alcools le gaz de synthèse mélangé à de la vapeur d'eau et on ajoute au gaz combustible requis dans la première étape, les hydrocarbures et le dioxyde de carbone gazeux obtenus en l'occurrence sous forme de sous-produits,
et on récupère le mélange de produits inorganique solide obtenu à la première étape, l'eau de lavage obtenue à la troisième étape, ainsi que les hydrocarbures et/ou les alcools obtenus à la quatrième étape.

2. Procédé selon la revendication 1, caractérisé en ce que le mélange de matières mentionné contient au moins une, en particulier deux matières de départ choisies parmi le groupe constitué par :
des terres :
en particulier, des terres polluées par des solvants, des huiles, du goudron ou des métaux lourds, ou encore des composants terreux à pollutions organique et inorganique, tels que par exemple des débris de construction ou encore du sable pollué par des métaux lourds et/ou des métaux nobles,
des charbons :
en particulier, des charbons à forte teneur en soufre ou en lignine ou encore des charbons actifs chargés de vapeurs de solvants,
des scories :
en particulier, des scories de chaufferies industrielles, de hauts-fourneaux, d'usines génératrices thermiques ou encore d'installations d'incinération d'ordures,
de la poussière :
en particulier, de la poussière de filtrage d'électrofiltres ou encore des résidus secs de la purification humide, semi-humide ou sèche de gaz brûlés dans des installations d'incinération d'ordures ou dans des chaufferies industrielles,
des écumes :
en particulier, des boues de curage qui se forment en excès lors de l'épuration des eaux d'égouts ou qui sont polluées par des métaux lourds, des boues de galvanoplastie, des boues provenant de la fabrication de munitions et d'explosifs, ainsi que des résidus de la distillation par solvants et de la fabrication de colorants et de laques, de vernis ou de peintures,
des produits alimentaires :
en particulier, des résidus, des surplus ou des sous-produits de la préparation de produits alimentaires ou de la consommation de ces derniers, en particulier des sédiments de café, des détritus d'abattoirs,
des produits chimiques :
en particulier, des sous-produits provenant d'analyses ou de procédés chimiques ou biochimiques, en particulier des résidus de filtrage, des produits chimiques non volatils altérés ou encore des déchets faiblement radioactifs provenant de laboratoires,
des organes :
en particulier des cadavres, des matières tissulaires ou sanguines provenant de la chirurgie, ainsi que d'autres résidus solides issus d'hôpitaux, en particulier des médicaments périmés,
des caoutchoucs et des matières synthétiques :
en particulier, des résidus de la production et de la consommation, par exemple des bandages pneumatiques contenant des élastomères, des résines thermoplastiques et des résines thermodurcissables, liés ou mélangés à des matières métalliques ou à d'autres matières inorganiques.

3. Procédé selon l'une quelconque des revendications 1 ou 2, caractérisé en ce que le mélange de matières est choisi parmi un mélange de poussière de filtrage-boues de curage, un mélange de poussière de filtrage-charbons et un mélange de sable-boues de curage-charbons.

4. Procédé selon l'une quelconque des revendications 1 à 3, caractérisé en ce que le mélange de matières mentionné contient au moins une, en particulier deux matières de départ choisies parmi le groupe constitué par :
des huiles et des paraffines :
telles que des huiles lourdes ou des paraffines, en particulier, provenant du -raffinage du pétrole ou du traitement des huiles usées,
des alcools et des cétones :
tels que le méthanol, l'éthanol ou des alcools industriels ou encore des cétones, en particulier l'acétone,
des hydrocarbures halogénés :
tels que le trichloréthane, le trichloréthylène, le chloroforme et des composés aromatiques chlorés, en particulier des chlorobenzènes ou des polychlorobiphényles, -furannes ou -dioxines, ou encore un Fréon, en particulier le Fréon 113,
des liquides inorganiques :
tels que des acides minéraux et des bases avec ou sans métaux lourds, en particulier l'acide chlorhydrique, le chlorure de fer dissous et l'acide sulfurique contenant du chrome, ainsi que des cyanures, des nitrites, des nitrates et des phosphates dissous.

5. Procédé selon l'une quelconque des revendications 1 à 4, caractérisé en ce que le mélange de matières mentionné est choisi parmi un mélange d'huiles usées-hydrocarbures chlorés et un mélange de sable-boues de curage-hydrocarbures halogénés.

6. Procédé selon l'une quelconque des revendications 1 à 5, caractérisé en ce que, dans la première étape, le mélange gazeux mentionné contient de 10 à 40% en volume de vapeur d'eau, de 10 à 40% en volume de gaz combustible, en particulier du méthane, de 5 à 20% en volume d'oxygène et de 30 à 70% en volume de dioxyde de carbone.

7. Procédé selon l'une quelconque des revendications 1 à 6, caractérisé en ce que le temps réactionnel dans la première étape se situe, pour des mélanges de matières liquides, entre 0,5 et 3 secondes et, pour des mélanges de matières solides, entre 20 minutes et 2 heures.

8. Procédé selon l'une quelconque des revendications 1 à 7, caractérisé en ce que, dans la première étape, au mélange de gaz mentionné, on ajoute des gaz toxiques tels que par exemple des gaz brûlés de chaufferies, des gaz d'échappement de moteurs à combustion ou de l'air d'évacuation provenant de cheminées d'aération.

9. Procédé selon l'une quelconque des revendications 1 à 8, caractérisé en ce que, dans la première étape, on effectue la réaction mentionnée, dans le cas de mélanges de matières liquides, dans un brûleur qui est entraîné avec le mélange de gaz de synthèse-vapeur d'eau obtenu à la troisième étape.

10. Procédé selon l'une quelconque des revendications 1 à 9, caractérisé en ce qu'on effectue la deuxième étape dans une chambre de post-combustion.

11. Procédé selon l'une quelconque des revendications 1 à 10, caractérisé en ce que, dans la première étape, on effectue la réaction mentionnée, dans le cas de mélanges de matières solides et boueuses, dans un foyer pour matières solides, qui est entraîné avec le mélange de gaz de synthèse-vapeur d'eau obtenu à la troisième étape.

12. Procédé selon l'une quelconque des revendications 1 à 11, caractérisé en ce que, dans la première étape, l'oxygène requis est de l'oxygène résiduaire qui est contenu dans les gaz d'échappement provenant de chaufferies, de moteurs à combustion ou encore dans l'air d'évacuation provenant d'installations d'aération.

13. Procédé selon l'une quelconque des revendications 1 à 12, caractérisé en ce que, dans la troisième étape, l'eau requise est de l'eau usée, de l'eau d'infiltration provenant de décharges, de l'eau contaminée ou encore de l'eau de mer.
